# EUROPEAN PATENT SPECIFICATION

(11) **EP 3 670 309 B1**
(45) Date of publication and mention of the grant of the patent: **20.03.2024**
(21) Application number: 19214702.3
(22) Date of filing: 10.12.2019
(51) Int. Cl.: B62D 55/02, B62D 55/084, B62D 55/112, B62D 55/116, B62D 55/30, A01G 23/00

(54) **FORESTRY VEHICLE**
FORSTFAHRZEUG
VÉHICULE FORESTIER

(30) Priority: 21.12.2018 SE 1851642
(43) Date of publication of application: 24.06.2020
(73) Proprietor: Eco Log Sweden AB, 826 22 Söderhamn (SE)
(72) Inventor: ERIKSSON, Jan, 810 20 ÖSTERFÄRNEBO (SE); LAMEKSSON, Lars, 340 12 Annerstad (SE)
(74) Representative: AWA Sweden AB

(56) References cited:
- WO-A1-2015/110373
- FR-A1- 2 828 673
- JP-A- H10 119 835
- JP-A- 2007 022 233
- US-B2- 7 357 201

## Description

### FIELD OF THE INVENTION AND PRIOR ART

The present invention relates to a forestry vehicle according to the preamble of claim 1. The forestry vehicle of the present invention may for instance have the form of a so-called harvester provided with a harvester head for tree harvesting. The forestry vehicle of the present invention may also have the form of a so-called forwarder, which is a forestry vehicle intended to be used for fetching harvested pieces of timber in the forest and for transporting these pieces of timber to a storing place.

A forestry vehicle provided with drive wheels that are pivotally connected to the chassis of the vehicle by means of pivot arms is previously known, for instance from WO 92/10390 A1 and US 5 366 337 A. The pivot arms create possibilities for excellent driving characteristics, particularly with respect to driving over tough terrain. The pivot arms make it possible for the vehicle to obtain a considerable ground clearance, which is favourable when the vehicle needs to pass over rather high obstacles. The document FR 2 828 673 A1 discloses a crawler frame for an agricultural vehicle. It discloses a drive wheel, an idler wheel, both surrounded by a track belt. A pivot arm is linked to the drive wheel and the idler wheel. The drive wheel and its center axis is however not pivotable with respect to the chassis through the pivot arm.

When driving on soft terrain, for instance in the form of bogs, there is a risk that the vehicle wheels will sink into the ground and make the driving of the vehicle difficult. In worst case, the vehicle will get stuck or tip over. In order to avoid such problems, it is previously known to use bogies on forestry vehicles with vehicle wheels arranged in pairs on each bogie and with a track belt arranged in an endless loop around the two wheels of each bogie. The track belts of such bogies will give improved grip between the wheel system of the vehicle and the ground and will improve the stability of the vehicle. The track belts will also result in a distribution of the load from the vehicle over a larger support area and the pressure against the ground from the vehicle is thereby reduced. However, there are also disadvantages with such bogies. A conventional bogie of this type has a rather complex construction and high weight and is rather costly. Another disadvantage is that there will be high friction between the track belt of such a bogie and the ground when the vehicle is turning, which may cause damages to the ground and deteriorate the manoeuvrability of the vehicle.

### SUMMARY OF THE INVENTION

The object of the present invention is to provide a new and favourable solution to the above-mentioned problem.

According to the invention, this object is achieved by means of a forestry vehicle having the features defined in claim 1.

The forestry vehicle of the present invention comprises:
- a chassis;
- first and second pivot arms arranged opposite each other on opposite sides of the chassis, each of which having a first end and an opposite second end, wherein each pivot arm at its first end is pivotally mounted to the chassis so as to be pivotable in relation to the chassis in an essentially vertical plane about a pivot axis;
- a first drive wheel, which is carried by the first pivot arm and rotatably mounted to the first pivot arm at the second end thereof;
- a second drive wheel, which is carried by the second pivot arm and rotatably mounted to the second pivot arm at the second end thereof;
- a rotatable first idler wheel carried by the first pivot arm and a rotatable second idler wheel carried by the second pivot arm, wherein the first and second idler wheels have an external diameter that is equal to or smaller than half the external diameter of the first and second drive wheels;
- a first track belt arranged in an endless loop around the first drive wheel and the first idler wheel; and
- a second track belt arranged in an endless loop around the second drive wheel and the second idler wheel.

According to the invention, the first idler wheel is located on that side of the first drive wheel that faces the pivot axis of the first pivot arm and the second idler wheel is located on that side of the second drive wheel that faces the pivot axis of the second pivot arm. This arrangement of the idler wheels implies that each idler wheel will be moved in relation to the chassis of the vehicle together with the associated pivot arm, wherein the distance between the idler wheel and the ground will be reduced when the pivot arm is pivoted upwards in relation to the chassis and increased when the pivot arm is pivoted downwards in relation to the chassis. Hereby, the lower part of each track belt located between the associated drive wheel and idler wheel may be brought closer to the ground in order to increase the support surface against the ground, and thereby improve the stability of the vehicle and reduce the pressure against the ground, by pivoting the pivot arm of the drive wheel upwards in relation to the chassis of the vehicle, whereupon this part of the track belt may be moved back away from the ground in order to reduce the support surface against the ground, and thereby improve the manoeuvrability of the vehicle, by pivoting the pivot arm of the drive wheel downwards in relation to the chassis of the vehicle. Thus, by pivoting the pivot arms in a desired direction in relation to the chassis of the vehicle, the support surface against the ground of the wheel system can in a simple manner be adapted to the prevailing conditions of the terrain over which the vehicle is driving and to the presently required manoeuvrability of the vehicle. Due to the fact that the idler wheels are small in size compared to the drive wheels, they will have a comparatively low weight and may be mounted to the pivot arms in a simple manner.

According to an embodiment of the invention, each idler wheel is mounted to the associated pivot arm in a fixed position in relation to it. Hereby, the idler wheel arrangements may be given a very simple and cost-effective construction.

According to another embodiment of the invention, each idler wheel is rotatably mounted to a holder, which in its turn is pivotally mounted to the associated pivot arm, wherein the pivotal position of the holder in relation to the associated pivot arm, and thereby the position of the idler wheel in relation to the associated pivot arm, is adjustable by means of a power member, preferably in the form of a hydraulic cylinder. Hereby, it will be possible to adjust the distance between the centre axis of each drive wheel and the centre axis of the associated idler wheel in a simple manner, to thereby adjust the track belt tension, by adjustment of the pivotal position of the holder of the idler wheel in relation to the pivot arm.

According to another embodiment of the invention, each idler wheel is rotatably mounted to a carrier arm, which in its turn is mounted to the associated pivot arm, wherein the carrier arm is telescopically extensible in order to allow the position of the idler wheel in relation to the associated pivot arm to be varied by adjustment of the extension length of the carrier arm. Hereby, it will be possible to adjust the distance between the centre axis of each drive wheel and the centre axis of the associated idler wheel in a simple manner, to thereby adjust the track belt tension, by adjustment of the extension length of the carrier arm. It will also be possible to adjust the position of the idler wheel in relation to the ground in a simple manner by adjustment of the extension length of the carrier arm

According to another embodiment of the invention, said carrier arm is pivotally mounted to the associated pivot arm, wherein the angle between the longitudinal axis of the carrier arm and the longitudinal axis of the pivot arm is adjustable by means of a power member, preferably in the form of a hydraulic cylinder. Hereby, the above-mentioned adjustability of the idler wheel position is further improved.

Further advantageous features of the forestry vehicle according to the present invention will appear from the description following below and the dependent claims.

### BRIEF DESCRIPTION OF THE DRAWINGS

With reference to the appended drawings, a specific description of embodiments of the invention cited as examples follows below. In the drawings:
- Fig 1: is a lateral view from a first side of a forestry vehicle according to a first embodiment of the present invention, as seen with the pivot arms of the vehicle in swung-down positions,
- Fig 2: is a lateral view from an opposite second side of the forestry vehicle of Fig 1, as seen with the pivot arms in swung-down positions,
- Fig 3: is a lateral view corresponding to Fig 1, as seen with the pivot arms in swung-up positions,
- Fig 4: is an outline diagram of a pivot arm on the first side of the forestry vehicle of Fig 1,
- Fig 5: is an outline diagram of a pivot arm on the second side of the forestry vehicle of Fig 1,
- Figs 6 and 7: are schematic perspective views of a part of the forestry vehicle of Fig 1,
- Figs 8 and 9: are schematic perspective views of a part of a forestry vehicle according to a second embodiment of the invention,
- Figs 10 and 11: are schematic perspective views of a part of a forestry vehicle according to a third embodiment of the invention,
- Fig 12: is a lateral view from a first side of a forestry vehicle according to a fourth embodiment of the present invention, as seen with the pivot arms of the vehicle in swung-down positions,
- Fig 13: is a lateral view from an opposite second side of the forestry vehicle of Fig 12, as seen with the pivot arms in swung-down positions, and
- Fig 14: is a lateral view corresponding to Fig 12, as seen with the pivot arms in swung-up positions.

### DETAILED DESCRIPTION OF EMBODIMENTS OF THE INVENTION

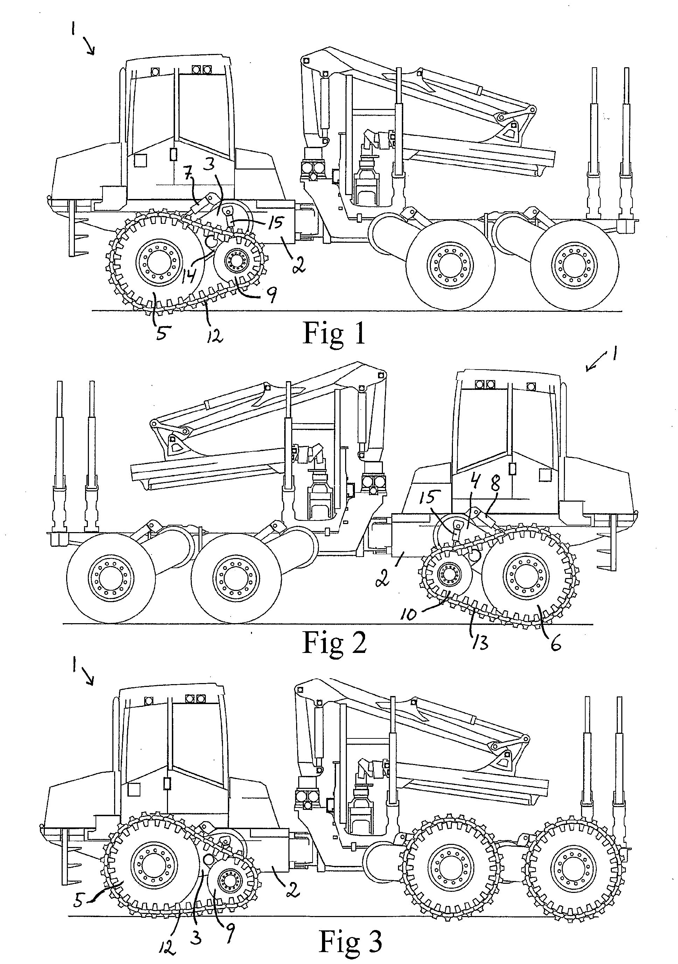

Different embodiments of a forestry vehicle 1 according to the present invention are illustrated in Figs 1-14. The forestry vehicle 1 comprises:
- a chassis 2;
- first and second pivot arms 3, 4 arranged opposite each other on opposite sides of the chassis 2;
- a first drive wheel 5 carried by the first pivot arm 3;
- a second drive wheel 6 carried by the second pivot arm 4;
- a first power member 7, preferably in the form of a hydraulic cylinder, for pivoting the first pivot arm 3 in relation to the chassis 2; and
- a second power member 8, preferably in the form of a hydraulic cylinder, for pivoting the second pivot arm 4 in relation to the chassis 2.

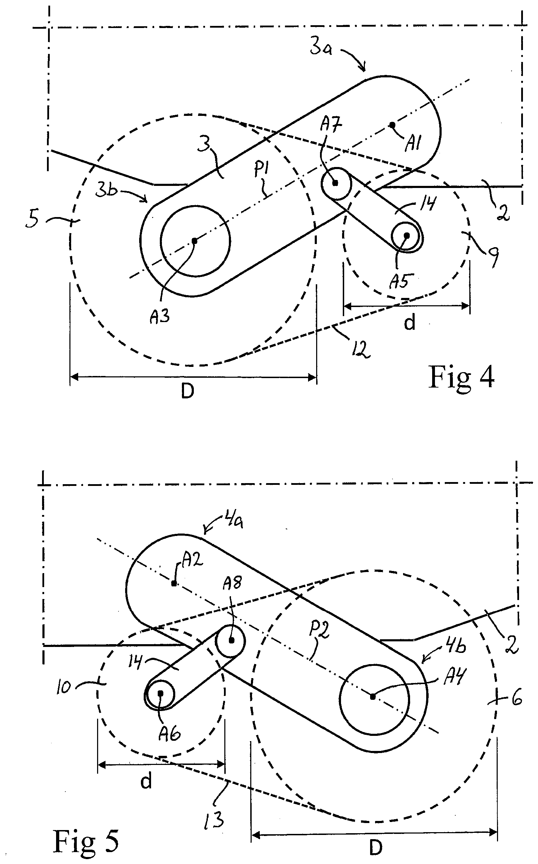

The first and second power members 7, 8 have been omitted in Figs 4 and 5 for the sake of clarity.

Each one of said pivot arms 3, 4 has a first end 3a, 4a and an opposite second end 3b, 4b (see Figs 4 and 5), wherein each pivot arm at its first end 3a, 4a is pivotally mounted to the chassis 2 so as to be pivotable in relation to the chassis in a vertical or at least essentially vertical plane about a pivot axis A1, A2. The first drive wheel 5 is rotatably mounted to the first pivot arm 3 at the second end 3b thereof, and the second drive wheel 6 is rotatably mounted to the second pivot arm 4 at the second end 4b thereof.

Each drive wheel 5, 6 may be driven by an electric or hydraulic drive motor that is mounted to the associated pivot arm 3, 4. As an alternative, the drive wheels 5, 6 may be driven by a drive engine in the form of a combustion engine or an electric motor that is mounted to the chassis 2 of the vehicle 1, wherein driving torque is transmitted from the drive engine to each drive wheel 5, 6 through a transmission in the associated pivot arm 3, 4.

The vehicle 1 further comprises a rotatable first idler wheel 9 carried by the first pivot arm 3 and a rotatable second idler wheel 10 carried by the second pivot arm 4. The idler wheels 9, 10 have an external diameter d that is equal to or smaller than half the external diameter D of the drive wheels 5, 6, i.e. d≤D/2. Thus, the idler wheels 9, 10 are considerably smaller than the drive wheels 5, 6. The first idler wheel 9 is located on that side of the first drive wheel 5 that faces the pivot axis A1 of the first pivot arm 3, the second idler wheel 10 is located on that side of the second drive wheel 6 that faces the pivot axis A2 of the second pivot arm 4.

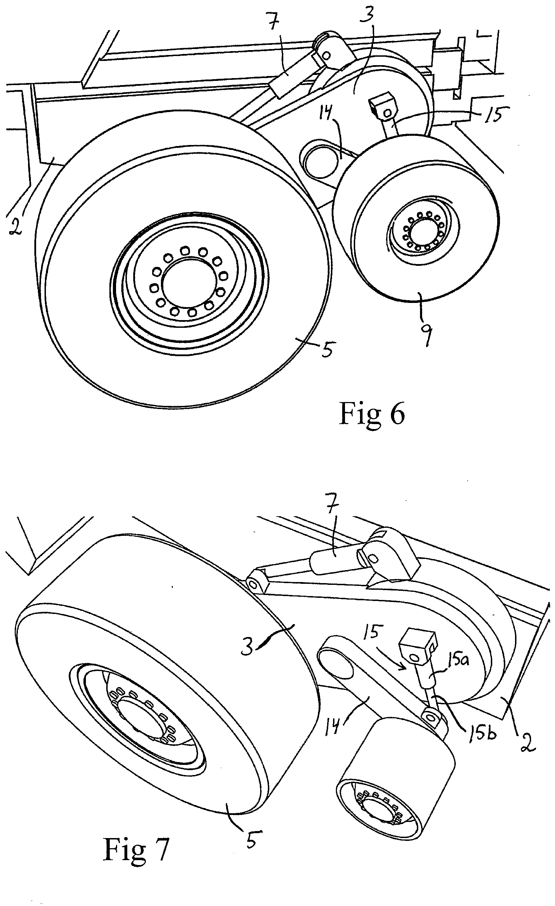

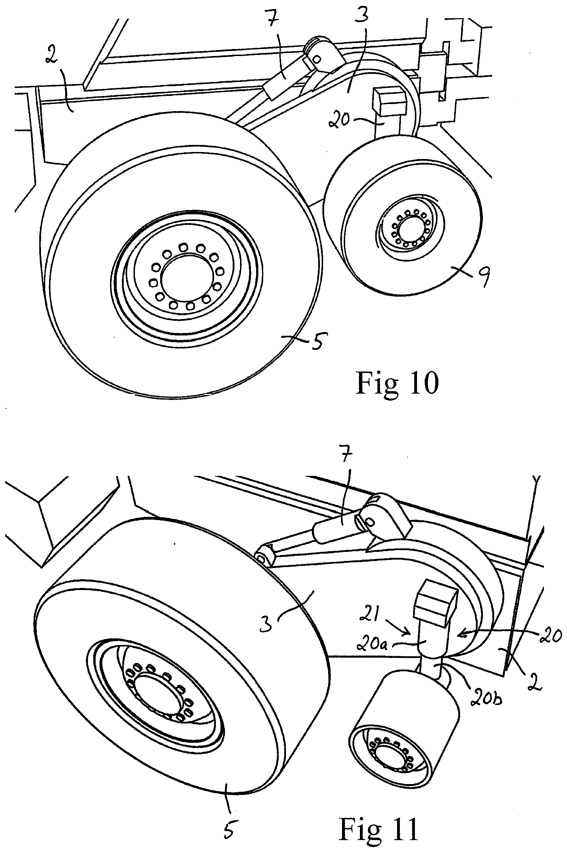

The tyre of the first idler wheel 9 has been omitted in Figs 7 and 11 for the sake of clarity.

A first track belt 12 (see Figs 1, 3, 4, 12 and 14) is arranged in an endless loop around the first drive wheel 5 and the first idler wheel 9, and a second track belt 13 (see Figs 2, 5 and 13) is arranged in an endless loop around the second drive wheel 6 and the second idler wheel 10. The first track belt 12 is in engagement with the envelope surfaces of the first drive wheel 5 and the first idler wheel 9, and the second track belt 13 is in engagement with the envelope surfaces of the second drive wheel 6 and the second idler wheel 10. The track belts 12, 13 have been omitted in Figs 6-11 for the sake of clarity.

Each drive wheel 5, 6 has a centre axis A3, A4 which extends in parallel with the pivot axis A1, A2 of the associated pivot arm 3, 4. The centre axis A3 of the first drive wheel 5 and the pivot axis A1 of the first pivot arm 3 are located in a common plane P1, here denominated first plane. The centre axis A4 of the second drive wheel 6 and the pivot axis A2 of the second pivot arm 4 are located in a common plane P2, here denominated second plane. In Figs 4 and 5, the first and second planes P1, P2 are illustrated with dash-dotted lines, wherein these planes P1, P2 extend perpendicularly to the sheet of the drawing. The drive wheels 5, 6, the idler wheels 9, 10 and the track belts 12, 13 are very schematically illustrated with dashed lines in Figs 4 and 5. The centre axis A5 of the first idler wheel 9 is offset from the first plane P1 and located on the downwardly facing side thereof, i.e. between the first plane P1 and the ground. The centre axis A6 of the second idler wheel 10 is offset from the second plane P2 and located on the downwardly facing side thereof, i.e. between the second plane P2 and the ground.

In the illustrated embodiments, the centre axis A5 of the first idler wheel 9 is located between the centre axis A3 of the first drive wheel 5 and the pivot axis A1 of the first pivot arm 3, as seen in the longitudinal direction of the first pivot arm 3, whereas the centre axis A6 of the second idler wheel 10 is located between the centre axis A4 of the second drive wheel 6 and the pivot axis A2 of the second pivot arm 4, as seen in the longitudinal direction of the second pivot arm 4.

In the embodiment illustrated in Figs 1-7, each idler wheel 9, 10 is rotatably mounted to a holder 14, which in its turn is pivotally mounted to the associated pivot arm 3, 4. Each holder 14 is pivotable in relation to the associated pivot arm 3, 4 about a pivot axis A7, A8, which is parallel to the pivot axis A1, A2 of the pivot arm. The pivotal position of each holder 14 in relation to the associated pivot arm 3, 4, and thereby the position of each idler wheel 9, 10 in relation to the associated pivot arm 3, 4 and in relation to the associated drive wheel 5, 6, is adjustable by means of a power member 15. In the illustrated example, each power member 15 has the form of a hydraulic cylinder, wherein a cylinder housing 15a (see Fig 7) of the hydraulic cylinder 15 is articulately connected to the associated pivot arm 3, 4 and a piston rod 15b of the hydraulic cylinder is articulately connected to the associated holder 14. The power members 15 have been omitted in Figs 4 and 5 for the sake of clarity. In the illustrated example, each holder 14 has the form of an elongated arm, wherein the holder 14 at a first end is pivotally mounted to the associated pivot arm 3, 4 and wherein the idler wheel 9, 10 carried by the holder 14 is rotatably mounted to the holder at an opposite second end thereof.

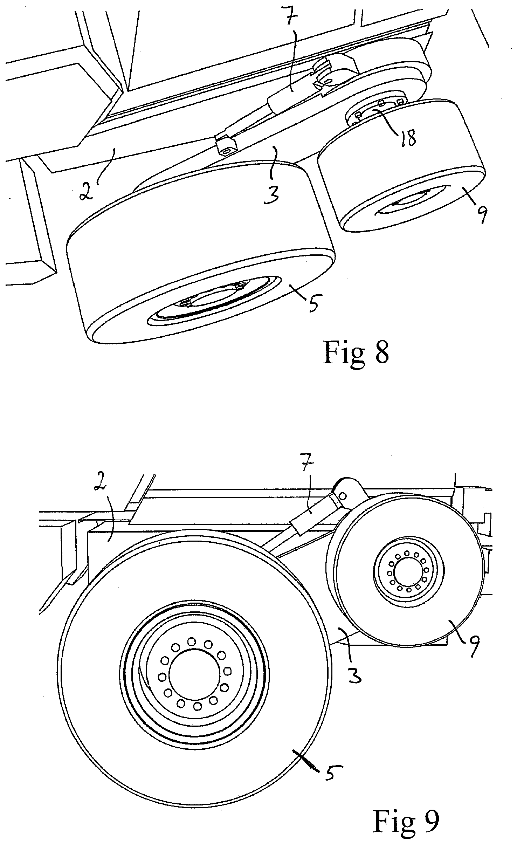

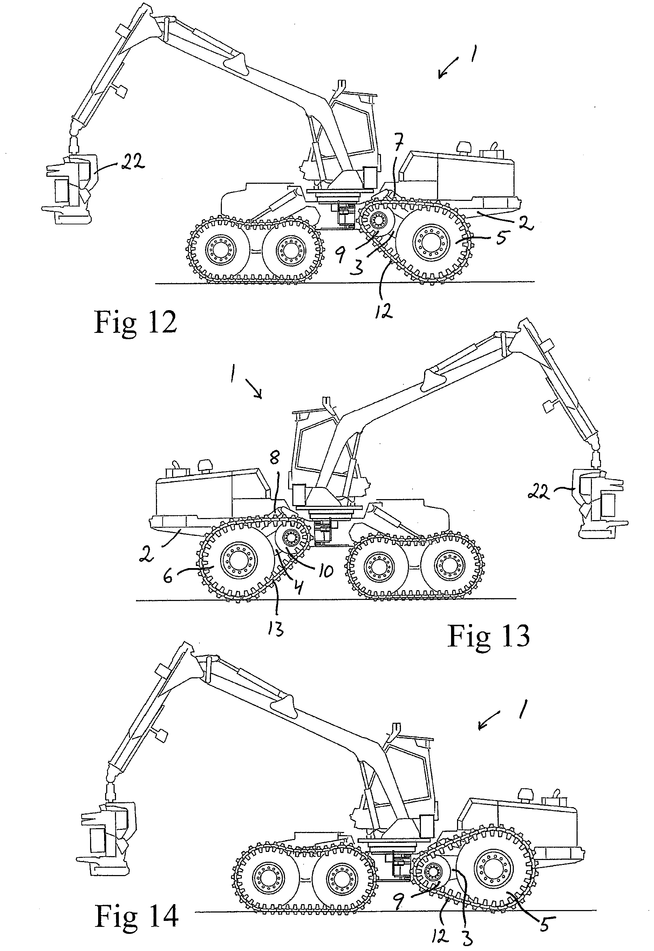

In the embodiment illustrated in Figs 8 and 9 and in the embodiment illustrated in Figs 12-14, each idler wheel 9, 10 is mounted to the associated pivot arm 3, 4 in a fixed position in relation to it. In the example illustrated in Figs 8 and 9, each idler wheel 9, 10 is rotatably mounted to a wheel shaft 18, which in its turn is non-rotatably mounted to the associated pivot arm 3, 4. As an alternative, each idler wheel 9, 10 may be non-rotatably mounted to a wheel shaft, which in its turn is rotatably mounted to the associated pivot arm 3, 4.

In the embodiment illustrated in Figs 10 and 11, each idler wheel 9, 10 is rotatably mounted to a carrier arm 20, which in its turn is mounted to the associated pivot arm 3, 4, wherein the carrier arm 20 is telescopically extensible in order to allow the position of the idler wheel 9, 10 in relation to the associated pivot arm 3, 4 to be varied by adjustment of the extension length of the carrier arm 20. An upper part 20a of the carrier arm 20 is fixed to the associated pivot arm 3, 4 and the idler wheel 9, 10 is rotatably mounted to a lower part 20b of the carrier arm 20, wherein the lower part 20b is axially displaceable in relation to the upper part 20a in order to vary the extension length of the carrier arm 20 and thereby adjust the position of the idler wheel 9, 10 in relation to the associated pivot arm 3, 4. The longitudinal axis of each carrier arm 20 extends at an angle to the longitudinal axis of the associated pivot arm 3, 4. The upper part 20a of each carrier arm 20 may be pivotally mounted to the associated pivot arm 3, 4, wherein the angle between the longitudinal axis of the carrier arm 20 and the longitudinal axis of the associated pivot arm 3, 4 is adjustable by means of a power member, preferably in the form of a hydraulic cylinder.

Each carrier arm 20 is provided with a hydraulic cylinder 21, by means of which the carrier arm 20 is extensible in its longitudinal direction by an axial movement of the lower part 20b of the carrier arm 20 in relation to the upper part 20a thereof. The upper part 20a of the carrier arm 20 may be formed by a cylinder housing of the hydraulic cylinder 21 and the lower part 20b of the carrier arm 20 may be formed by a piston rod of the hydraulic cylinder 21. As an alternative, each carrier arm 20 may be provided with a hydraulic cylinder in the form of a separate component that is mounted in an inner space of the carrier arm.

In the embodiment illustrated in Figs 1-3, the forestry vehicle 1 has the form of a forwarder, which is to be used for fetching harvested pieces of timber in the forest and for transporting these pieces of timber to a storing place. In the embodiment illustrated in Figs 12-14, the forestry vehicle 1 has the form of a harvester provided with a harvester head 22 for tree harvesting. The forestry vehicle of the present invention may also be designed as any other desired type of cross-country vehicle.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A forestry vehicle comprising:
- a chassis (2);
- first and second pivot arms (3, 4) arranged opposite each other on opposite sides of the chassis (2), each of which having a first end (3a, 4a) and an opposite second end (3b, 4b), wherein each pivot arm at its first end (3a, 4a) is pivotally mounted to the chassis (2) so as to be pivotable in relation to the chassis in an essentially vertical plane about a pivot axis (A1, A2);
- a first drive wheel (5), which is carried by the first pivot arm (3) and rotatably mounted to the first pivot arm at the second end (3b) thereof, wherein the first drive wheel (5) has a centre axis (A3), whereby the first drive wheel (5) and its centre axis (A3) are pivotable with respect to the chassis (2); and
- a second drive wheel (6), which is carried by the second pivot arm (4) and rotatably mounted to the second pivot arm at the second end (4b) thereof, wherein the second drive wheel (6) has a centre axis (A4), whereby the second drive wheel (6) and its centre axis (A4) are pivotable with respect to the chassis (2), wherein
- the vehicle (1) comprises:
• a rotatable first idler wheel (9) carried by the first pivot arm (3) and a rotatable second idler wheel (10) carried by the second pivot arm (4), wherein the first and second idler wheels (9, 10) have an external diameter (d) that is equal to or smaller than half the external diameter (D) of the first and second drive wheels (5, 6),
• a first track belt (12) arranged in an endless loop around the first drive wheel (5) and the first idler wheel (9), and
• a second track belt (13) arranged in an endless loop around the second drive wheel (6) and the second idler wheel (10);
- the first idler wheel (9) is located on that side of the first drive wheel (5) that faces the pivot axis (A1) of the first pivot arm (3); and
- the second idler wheel (10) is located on that side of the second drive wheel (6) that faces the pivot axis (A2) of the second pivot arm (4).

2. A forestry vehicle according to claim 1, **characterized in:**
- **that** the centre axis (A3) extends in parallel with the pivot axis (A1) of the first pivot arm (3), wherein the centre axis (A3) of the first drive wheel (5) and the pivot axis (A1) of the first pivot arm (3) are located in a common plane (P1), here denominated first plane;
- **that** the centre axis (A4) extends in parallel with the pivot axis (A2) of the second pivot arm (4), wherein the centre axis (A4) of the second drive wheel (6) and the pivot axis (A2) of the second pivot arm (4) are located in a common plane (P2), here denominated second plane;
- **that** the first idler wheel (9) has a centre axis (A5) which is offset from the first plane (P1) and located on the downwardly facing side of the first plane (P1); and
- **that** the second idler wheel (10) has a centre axis (A6) which is offset from the second plane (P2) and located on the downwardly facing side of the second plane (P2).

3. A forestry vehicle according to claim 2, **characterized in:**
- **that** the centre axis (A5) of the first idler wheel (9) is located between the centre axis (A3) of the first drive wheel (5) and the pivot axis (A1) of the first pivot arm (3), as seen in the longitudinal direction of the first pivot arm (3); and
- **that** the centre axis (A6) of the second idler wheel (10) is located between the centre axis (A4) of the second drive wheel (6) and the pivot axis (A2) of the second pivot arm (4), as seen in the longitudinal direction of the second pivot arm (4).

4. A forestry vehicle according to any of claims 1-3, **characterized in that** each idler wheel (9, 10) is mounted to the associated pivot arm (3, 4) in a fixed position in relation to it.

5. A forestry vehicle according to claim 4, **characterized in that** each idler wheel (9, 10) is non-rotatably mounted to a wheel shaft, which in its turn is rotatably mounted to the associated pivot arm (3, 4).

6. A forestry vehicle according to claim 4, **characterized in that** each idler wheel (9, 10) is rotatably mounted to a wheel shaft (18), which in its turn is non-rotatably mounted to the associated pivot arm (3, 4).

7. A forestry vehicle according to any of claims 1-3, **characterized in that** each idler wheel (9, 10) is rotatably mounted to a holder (14), which in its turn is pivotally mounted to the associated pivot arm (3, 4), wherein the pivotal position of the holder (14) in relation to the associated pivot arm (3, 4), and thereby the position of the idler wheel (9, 10) in relation to the associated pivot arm (3, 4), is adjustable by means of a power member (15), preferably in the form of a hydraulic cylinder.

8. A forestry vehicle according to claim 7, **characterized in that** said holder (14) has the form of an elongated arm, wherein the holder (14) at a first end is pivotally mounted to the associated pivot arm (3, 4) and wherein the idler wheel (9, 10) carried by the holder (14) is rotatably mounted to the holder at an opposite second end thereof.

9. A forestry vehicle according to any of claims 1-3, **characterized in that** each idler wheel (9, 10) is rotatably mounted to a carrier arm (20), which in its turn is mounted to the associated pivot arm (3, 4), wherein the carrier arm (20) is telescopically extensible in order to allow the position of the idler wheel (9, 10) in relation to the associated pivot arm (3, 4) to be varied by adjustment of the extension length of the carrier arm (20).

10. A forestry vehicle according to claim 9, **characterized in that** said carrier arm (20) is provided with a hydraulic cylinder (21), by means of which the carrier arm (20) is extensible in its longitudinal direction.

11. A forestry vehicle according to claim 9 or 10, **characterized in that** the longitudinal axis of said carrier arm (20) extends at an angle to the longitudinal axis of the associated pivot arm (3, 4).

12. A forestry vehicle according to 11, **characterized in that** said carrier arm (20) is pivotally mounted to the associated pivot arm (3, 4), wherein the angle between the longitudinal axis of the carrier arm (20) and the longitudinal axis of the pivot arm (3, 4) is adjustable by means of a power member, preferably in the form of a hydraulic cylinder.

13. A forestry vehicle according to any of claims 1-12, **characterized in that** the forestry vehicle (1) is a harvester.

14. A forestry vehicle according to any of claims 1-12, **characterized in that** the forestry vehicle (1) is a forwarder.

## Patentansprüche

1. Forstwirtschaftliches Fahrzeug, das Folgendes umfasst:
- ein Fahrgestell (2);
- einen ersten und einen zweiten Schwenkarm (3, 4), die einander gegenüberliegend auf gegenüberliegenden Seiten des Fahrgestells (2) angeordnet sind und von denen jeder ein erstes Ende (3a, 4a) und ein gegenüberliegendes zweites Ende (3b, 4b) aufweist, wobei jeder Schwenkarm an seinem ersten Ende (3a, 4a) schwenkbar am Fahrgestell (2) montiert ist, um in Bezug auf das Fahrgestell in einer im Wesentlichen vertikalen Ebene um eine Schwenkachse (A1, A2) schwenkbar zu sein;
- ein erstes Antriebsrad (5), das vom ersten Schwenkarm (3) getragen wird und am zweiten Ende (3b) des ersten Schwenkarms drehbar montiert ist, wobei das erste Antriebsrad (5) eine Mittelachse (A3) aufweist, wodurch das erste Antriebsrad (5) und seine Mittelachse (A3) im Verhältnis zum Fahrgestell (2) schwenkbar sind; und
- ein zweites Antriebsrad (6), das vom zweiten Schwenkarm (4) getragen wird und am zweiten Ende (4b) des zweiten Schwenkarms drehbar montiert ist, wobei das zweite Antriebsrad (6) eine Mittelachse (A4) aufweist, wodurch das zweite Antriebsrad (6) und seine Mittelachse (A4) im Verhältnis zum Fahrgestell (2) schwenkbar sind, wobei
- das Fahrzeug (1) Folgendes umfasst:
• ein drehbares erstes Zwischenrad (9), das vom ersten Schwenkarm (3) getragen wird, und ein drehbares zweites Zwischenrad (10), das vom zweiten Schwenkarm (4) getragen wird, wobei das erste und das zweite Zwischenrad (9, 10) einen Außendurchmesser (d) aufweisen, der kleiner gleich der Hälfte des Außendurchmessers (D) des ersten und des zweiten Antriebsrads (5, 6) ist,
• ein erstes Raupenband (12), das in einer Endlosschleife um das erste Antriebsrad (5) und das erste Zwischenrad (9) angeordnet ist, und
• ein zweites Raupenband (13), das in einer Endlosschleife um das zweite Antriebsrad (6) und das zweite Zwischenrad (10) angeordnet ist;
- das erste Zwischenrad (9) sich auf der Seite des ersten Antriebsrads (5) befindet, die der Schwenkachse (A1) des ersten Schwenkarms (3) zugewandt ist; und
- das zweite Zwischenrad (10) sich auf der Seite des zweiten Antriebsrads (6) befindet, die der Schwenkachse (A2) des zweiten Schwenkarms (4) zugewandt ist.

2. Forstwirtschaftliches Fahrzeug nach Anspruch 1, **gekennzeichnet dadurch:**
- **dass** sich die Mittelachse (A3) parallel zur Schwenkachse (A1) des ersten Schwenkarms (3) erstreckt, wobei sich die Mittelachse (A3) des ersten Antriebsrads (5) und die Schwenkachse (A1) des ersten Schwenkarms (3) in einer gemeinsamen Ebene (P1) befinden, hier als erste Ebene bezeichnet;
- **dass** sich die Mittelachse (A4) parallel zur Schwenkachse (A2) des zweiten Schwenkarms (4) erstreckt, wobei sich die Mittelachse (A4) des zweiten Antriebsrads (6) und die Schwenkachse (A2) des zweiten Schwenkarms (4) in einer gemeinsamen Ebene (P2) befinden, hier als zweite Ebene bezeichnet;
- **dass** das erste Zwischenrad (9) eine Mittelachse (A5) aufweist, die von der ersten Ebene (P1) versetzt ist und sich auf der nach unten zeigenden Seite der ersten Ebene (P1) befindet; und
- **dass** das zweite Zwischenrad (10) eine Mittelachse (A6) aufweist, die von der zweiten Ebene (P2) versetzt ist und sich auf der nach unten zeigenden Seite der zweiten Ebene (P2) befindet.

3. Forstwirtschaftliches Fahrzeug nach Anspruch 2, **gekennzeichnet dadurch:**
- **dass** sich die Mittelachse (A5) des ersten Zwischenrads (9) zwischen der Mittelachse (A3) des ersten Antriebsrads (5) und der Schwenkachse (A1) des ersten Schwenkarms (3) befindet, wie in der Längsrichtung des ersten Schwenkarms (3) gesehen; und
- **dass** sich die Mittelachse (A6) des zweiten Zwischenrads (10) zwischen der Mittelachse (A4) des zweiten Antriebsrads (6) und der Schwenkachse (A2) des zweiten Schwenkarms (4) befindet, wie in der Längsrichtung des zweiten Schwenkarms (4) gesehen.

4. Forstwirtschaftliches Fahrzeug nach einem der Ansprüche 1-3, **dadurch gekennzeichnet, dass** jedes Zwischenrad (9, 10) am zugeordneten Schwenkarm (3, 4) in einer festen Position in Bezug auf diesen montiert ist.

5. Forstwirtschaftliches Fahrzeug nach Anspruch 4, **dadurch gekennzeichnet, dass** jedes Zwischenrad (9, 10) drehfest an einer Radwelle montiert ist, die wiederum drehbar am zugeordneten Schwenkarm (3, 4) montiert ist.

6. Forstwirtschaftliches Fahrzeug nach Anspruch 4, **dadurch gekennzeichnet, dass** jedes Zwischenrad (9, 10) drehbar an einer Radwelle (18) montiert ist, die wiederum drehfest am zugeordneten Schwenkarm (3, 4) montiert ist.

7. Forstwirtschaftliches Fahrzeug nach einem der Ansprüche 1-3, **dadurch gekennzeichnet, dass** jedes Zwischenrad (9, 10) drehbar an einer Halterung (14) montiert ist, die wiederum schwenkbar am zugeordneten Schwenkarm (3, 4) montiert ist, wobei die Schwenkposition der Halterung (14) in Bezug auf den zugeordneten Schwenkarm (3, 4) und damit die Position des Zwischenrads (9, 10) in Bezug auf den zugeordneten Schwenkarm (3, 4) mittels eines Kraftelements (15), vorzugsweise in Form eines Hydraulikzylinders, verstellbar ist.

8. Forstwirtschaftliches Fahrzeug nach Anspruch 7, **dadurch gekennzeichnet, dass** die Halterung (14) die Form eines länglichen Arms aufweist, wobei die Halterung (14) an einem ersten Ende schwenkbar am zugeordneten Schwenkarm (3, 4) montiert ist und wobei das Zwischenrad (9, 10), das von der Halterung (14) getragen wird, an einem gegenüberliegenden zweiten Ende davon drehbar montiert ist.

9. Forstwirtschaftliches Fahrzeug nach einem der Ansprüche 1-3, **dadurch gekennzeichnet, dass** jedes Zwischenrad (9, 10) drehbar an einem Trägerarm (20) montiert ist, der wiederum am zugeordneten Schwenkarm (3, 4) montiert ist, wobei der Trägerarm (20) teleskopisch ausfahrbar ist, um durch Verstellen der Ausfahrlänge des Trägerarms (20) zu ermöglichen, dass die Position des Zwischenrads (9, 10) in Bezug auf den zugeordneten Schwenkarm (3, 4) variiert wird.

10. Forstwirtschaftliches Fahrzeug nach Anspruch 9, **dadurch gekennzeichnet, dass** der Trägerarm (20) mit einem Hydraulikzylinder (21) versehen ist, mittels dem der Trägerarm (20) in seiner Längsrichtung ausfahrbar ist.

11. Forstwirtschaftliches Fahrzeug nach Anspruch 9 oder 10, **dadurch gekennzeichnet, dass** sich die Längsachse des Trägerarms (20) in einem Winkel zur Längsachse des zugeordneten Schwenkarms (3, 4) erstreckt.

12. Forstwirtschaftliches Fahrzeug nach 11, **dadurch gekennzeichnet, dass** der Trägerarm (20) schwenkbar am zugeordneten Schwenkarm (3, 4) montiert ist, wobei der Winkel zwischen der Längsachse des Trägerarms (20) und der Längsachse des Schwenkarms (3, 4) mittels eines Kraftelements, vorzugsweise in Form eines Hydraulikzylinders, verstellbar ist.

13. Forstwirtschaftliches Fahrzeug nach einem der Ansprüche 1-12, **dadurch gekennzeichnet, dass** das forstwirtschaftliche Fahrzeug (1) eine Erntemaschine ist.

14. Forstwirtschaftliches Fahrzeug nach einem der Ansprüche 1-12, **dadurch gekennzeichnet, dass** das forstwirtschaftliche Fahrzeug (1) ein Forwarder ist.

## Revendications

1. Véhicule forestier comprenant :
- un châssis (2) ;
- des premier et second bras de pivot (3, 4) agencés opposés l'un à l'autre sur des côtés opposés du châssis (2) dont chacun présente une première extrémité (3a, 4a) et une seconde extrémité opposée (3b, 4b), dans lequel chaque bras de pivot est monté pivotant sur le châssis (2) à sa première extrémité (3a, 4a) de façon à pouvoir pivoter par rapport au châssis dans un plan essentiellement vertical sur un axe de pivot (A1, A2) ;
- une première roue directrice (5) qui est supportée par le premier bras de pivot (3) et montée en rotation sur le premier bras de pivot sur la seconde extrémité (3b) de celui-ci, dans lequel la première roue directrice (5) présente un axe central (A3), ce par quoi la première roue directrice (5) et son axe central (A3) peuvent pivoter par rapport au châssis (2) ; et
- une seconde roue directrice (6) qui est supportée par le second bras de pivot (4) et montée en rotation sur le second bras de pivot sur la seconde extrémité (4b) de celui-ci, dans lequel la seconde roue directrice (6) présente un axe central (A4), ce par quoi la seconde roue directrice (6) et son axe central (A4) peuvent pivoter par rapport au châssis (2) ; dans lequel
- le véhicule (1) comprend :
- une première roue folle rotative (9) supportée par le premier bras de pivot (3) et une seconde roue folle rotative (10) supportée par le second bras de pivot (4), dans lequel les première et seconde roues folles (9, 10) présentent un diamètre externe (d) qui est inférieur ou égal à la moitié du diamètre externe (D) des première et seconde roues directrices (5, 6),
- une première courroie de suivi (12) agencée en une boucle sans fin autour de la première roue directrice (5) et de la première roue folle (9), et
- une seconde courroie de suivi (13) agencée en une boucle sans fin autour de la seconde roue directrice (6) et de la seconde roue folle (10) ;
- la première roue folle (9) est située sur le côté de la première roue directrice (5) qui est face à l'axe de pivot (A1) du premier bras de pivot (3) ; et
- la seconde roue folle (10) est située sur le côté de la seconde roue directrice (6) qui est face à l'axe de pivot (A2) du second bras de pivot (4).

2. Véhicule forestier selon la revendication 1, **caractérisé en ce**
- **que** l'axe central (A3) s'étend parallèlement à l'axe de pivot (A1) du premier bras de pivot (3), dans lequel l'axe central (A3) de la première roue directrice (5) et l'axe de pivot (A1) du premier bras de pivot (3) sont situés dans un plan commun (P1), dénommé ici premier plan ;
- **que** l'axe central (A4) s'étend parallèlement à l'axe de pivot (A2) du second bras de pivot (4), dans lequel l'axe central (A4) de la seconde roue directrice (6) et l'axe de pivot (A2) du second bras de pivot (4) sont situés dans un plan commun (P2), dénommé ici second plan ;
- **que** la première roue folle (9) présente un axe central (A5) qui est décalé du premier plan (P1) et situé sur le côté orienté vers le bas du premier plan (P1) ; et
- **que** la seconde roue folle (10) présente un axe central (A6) qui est décalé du second plan (P2) et situé sur le côté orienté vers le bas du second plan (P2).

3. Véhicule forestier selon la revendication 2, **caractérisé en ce**
- **que** l'axe central (A5) de la première roue folle (9) est situé entre l'axe central (A3) de la première roue directrice (5) et l'axe de pivot (A1) du premier bras de pivot (3), vu dans le sens longitudinal du premier bras de pivot (3) ; et
- **que** l'axe central (A6) de la seconde roue folle (10) est situé entre l'axe central (A4) de la seconde roue directrice (6) et l'axe de pivot (A2) du second bras de pivot (4), vu dans le sens longitudinal du second bras de pivot (4).

4. Véhicule forestier selon l'une quelconque des revendications 1-3, **caractérisé en ce que** chaque roue folle (9, 10) est montée sur le bras de pivot associé (3, 4) dans une position fixe par rapport à lui.

5. Véhicule forestier selon la revendication 4, **caractérisé en ce que** chaque roue folle (9, 10) est montée non rotative sur un arbre de roue qui à son tour est monté rotatif sur le bras de pivot associé (3, 4).

6. Véhicule forestier selon la revendication 4, **caractérisé en ce que** chaque roue folle (9, 10) est montée rotative sur un arbre de roue (18) qui à son tour est monté non rotatif sur le bras de pivot associé (3, 4).

7. Véhicule forestier selon l'une quelconque des revendications 1-3, **caractérisé en ce que** chaque roue folle (9, 10) est montée rotative sur un support (14) qui à son tour est monté pivotant sur le bras de pivot associé (3, 4), dans lequel la position pivotante du support (14) par rapport au bras de pivot associé (3, 4) et ainsi la position de la roue folle (9, 10) par rapport au bras de pivot associé (3, 4) est ajustable au moyen d'un élément de puissance (15), de préférence sous la forme d'un vérin hydraulique.

8. Véhicule forestier selon la revendication 7, **caractérisé en ce que** ledit support (14) présente la forme d'un bras allongé, dans lequel le support (14), à une première extrémité, est monté pivotant sur le bras de pivot associé (3, 4) et dans lequel la roue folle (9, 10) supportée par le support (14) est montée rotative sur le support à une seconde extrémité opposée de celui-ci.

9. Véhicule forestier selon l'une quelconque des revendications 1-3, **caractérisé en ce que** chaque roue folle (9, 10) est montée rotative sur un bras porteur (20) qui à son tour est monté sur le bras de pivot associé (3, 4), dans lequel le bras porteur (20) est extensible de manière télescopique afin de permettre de varier la position de la roue folle (9, 10) par rapport au bras de pivot associé (3, 4) par ajustement de la longueur d'extension du bras porteur (20).

10. Véhicule forestier selon la revendication 9, **caractérisé en ce que** ledit bras porteur (20) est doté d'un vérin hydraulique (21) au moyen duquel le bras porteur (20) est extensible dans sa direction longitudinale.

11. Véhicule forestier selon la revendication 9 ou 10, **caractérisé en ce que** l'axe longitudinal dudit bras porteur (20) s'étend à un angle par rapport à l'axe longitudinal du bras de pivot associé (3, 4).

12. Véhicule forestier selon la revendication 11, **caractérisé en ce que** ledit bras porteur (20) est monté pivotant sur le bras de pivot associé (3, 4), dans lequel l'angle entre l'axe longitudinal du bras porteur (20) et l'axe longitudinal du bras de pivot (3, 4) est réglable au moyen d'un élément de puissance, de préférence sous la forme d'un vérin hydraulique.

13. Véhicule forestier selon l'une quelconque des revendications 1-12, **caractérisé en ce que** le véhicule forestier (1) est une abatteuse-façonneuse.

14. Véhicule forestier selon l'une quelconque des revendications 1-12, **caractérisé en ce que** le véhicule forestier (1) est un porteur.
